# EUROPÄISCHE PATENTSCHRIFT

(11) **EP 1 310 779 B1**
(45) Veröffentlichungstag und Bekanntmachung des Hinweises auf die Patenterteilung: **30.03.2005**
(21) Anmeldenummer: 02020607.4
(22) Anmeldetag: 13.09.2002
(51) Int. Cl.: G01L 3/10

(54) **Vorrichtung zum Messen von Drehmomenten und der Drehrichtung in einer Antriebsanordnung**
Device for measuring torque and rotation direction in a drive assembly
Dispositif pour mesurer le couple de torsion et le sens de rotation dans un dispositif d'entraînement

(30) Priorität: 09.11.2001 DE 10154737
(43) Veröffentlichungstag der Anmeldung: 14.05.2003
(73) Patentinhaber: GKN Walterscheid GmbH, 53797 Lohmar (DE)
(72) Erfinder: Wilks, Eberhard, 56307 Daufenbach (DE); Jung, Holger, 52457 Aldenhoven (DE)
(74) Vertreter: Müller, Thomas Michael, Dipl.-Ing.

(56) Entgegenhaltungen:
- EP-A- 1 199 550
- US-A- 4 488 443
- US-A- 4 672 855
- US-A- 5 228 349
- PATENT ABSTRACTS OF JAPAN vol. 018, no. 303 (P-1751), 9. Juni 1994 (1994-06-09) & JP 06 066652 A (KUBOTA CORP), 11. März 1994 (1994-03-11)

## Beschreibung

Die Erfindung betrifft eine Vorrichtung zum Messen von Drehmomenten und der Drehrichtung in einer Antriebsanordnung.

Bevorzugt wird zur Drehmomentmessung an einem drehenden Bauelement, beispielsweise einer Antriebswelle in einem Getriebe, die mit Drehmoment beaufschlagt ist, diese mit Dehnmessstreifen bestückt. Die davon erzeugten elektrischen Signale werden über Schleifringübertrager nach außen übertragen. In solchen Einrichtungen können hochpräzise Drehmomentsignale erzeugt werden, wie sie beispielsweise bei Labormesseinrichtungen erforderlich sind. Die Signalübertragung kann auch kontaktlos mittels Sender und Empfänger erfolgen. Die Bestückung mit Messbrücken aus Dehnmessstreifen, deren Eichung und die Verkabelung bedeuten hohe Kosten. Ein wesentlicher Kostenfaktor ist die Signalübertragung von der rotierenden Welle auf die stehenden Bauteile. Sie birgt durch den hohen Integrationsgrad von Elektronikbauteilen in Getrieben darüber hinaus eine hohe Fehlerquote in sich. Für viele Einrichtungen und Maschinen ist die hohe Genauigkeit dieser Art von Messeinrichtungen nicht gefordert. Die vorgenannten Einrichtungen lassen sich jedoch nicht so entfeinern, dass Kostengrößen erreicht werden, die angemessen sind. Aus diesem Grunde kommen bei Antriebssystemen für Landmaschinen trotz des hohen Nutzens, den eine Drehmomentmessung für den Arbeitsprozess bringt, solche Einrichtungen praktisch nicht zum Einsatz. Ein Beispiel für die Integration einer solchen Einrichtung in ein Getriebe ist der DE 42 31 412 C1 zu entnehmen.

Die US 4 488 443 zeigt eine Vorrichtung zum Messen von Drehmomenten an einer Welle mit einer ersten Geberscheibe und einer zweiten Geberscheibe. Die erste Geberscheibe ist drehfest mit der Welle verbunden. Die zweite Geberscheibe ist drehfest mit einem Rohr verbunden, welches koaxial zur Welle angeordnet ist. Das Rohr ist an einem ersten Längsende, welches in einem Abstand zur ersten Geberscheibe angeordnet ist, drehfest mit der Welle verbunden. Das zweite Ende des Rohrs ist auf der Welle gleitend gelagert und der ersten Geberscheibe benachbart angeordnet. An dem zweiten Ende des Rohres ist ferner die zweite Geberscheibe befestigt. Die erste Geberscheibe und die zweite Geberscheibe weisen jeweils Zähne auf, die ausgehend von einer Stirnfläche in Richtung zur jeweilig anderen Geberscheibe vorstehen. Die Zähne der ersten Geberscheibe und die der zweiten Geberscheibe sind über den Umfang verteilt abwechselnd und mit Abstand zueinander angeordnet. Ein Sensor, der ortsfest zur Welle angeordnet ist, erfasst bei der Drehung der Welle das Passieren der Zähne. Bei einer hohen Drehmomentbelastung tordiert die Welle, so dass die erste Geberscheibe relativ zur zweiten Geberscheibe verdreht wird und sich die Abstände zwischen den Zähnen der ersten Geberscheibe und denen der zweiten Geberscheibe verändern. Über die vom Sensor ermittelten Abstände zwischen den Zähnen lassen sich Rückschlüsse auf das aufgetretene Drehmoment ziehen. Nachteil ist jedoch, dass nicht ermittelbar ist, in welche Richtung die Welle dreht und in welche Richtung das Drehmoment wirkt.

Aufgabe der vorliegenden Erfindung ist es, eine Vorrichtung zu schaffen, die geeignet ist, sowohl Drehmomente als auch die Drehrichtung zu ermitteln.

Die Aufgabe wird erfindungsgemäß durch eine Vorrichtung zum Messen von Drehmomenten und der Drehrichtung in einer Antriebsanordnung umfassend
- ein Torsionselement, das vom Drehmoment beaufschlagbar ist und zum Übertragen von Drehmomenten um eine Drehachse drehend antreibbar ist, und das durch eine Torsionswelle mit einem ersten Wellenende und einem zweiten Wellenende dargestellt ist,
- ein erstes Geberelement, das zapfenförmig gestaltet ist und quer zur Drehachse drehfest am Torsionselement angebracht ist und bei Rotation des Torsionselements auf einem ersten Rotationskreis bewegt wird,
- ein Referenzelement, das durch ein Rohr mit einem ersten Rohrende und einem zweiten Rohrende dargestellt ist, das koaxial um das Torsionselement angeordnet ist und dessen erstes Rohrende mit dem ersten Wellenende fest verbunden ist,
- ein zweites Geberelement, das Bestandteil des Referenzelements ist, das am Außenumfang des zweiten Rohrendes des Referenzelements angeordnet ist, das in einem Referenzabstand zum ersten Geberelement mit dem Torsionselement drehfest verbunden ist und bei Rotation des Torsionselements auf einem zweiten Rotationskreis bewegt wird, wobei der erste Rotationskreis und der zweite Rotationskreis aufeinanderliegen,
- eine Sensoreinheit, die ortsfest und in einem Abstand zur Drehachse angeordnet ist und die das Passieren der Geberelemente oder einer Referenzkante oder Referenzfläche erfasst und eine entsprechende Signalfolge erzeugt, wobei die Geberelemente unterschiedlich lange Signale und in dem relevanten Messbereich unterschiedlich lange Signalpausen zwischen den Signalen erzeugen sowie
- eine Auswerteeinheit, welcher die Signale zuführbar sind und die aus dem zeitlichen Abstand und der zeitlichen Abfolge der unterschiedlich langen Signale und Signalpausen das anliegende Drehmoment sowie die Drehrichtung ermittelt,
- wobei das zweite Rohrende des Referenzelements eine Aussparung für den Durchtritt des am Torsionselement angebrachten ersten Geberelementes aufweist und beide Geberelemente in einer Ebene auf ihrem gemeinsamen Rotationskreisen umfangsversetzt angeordnet sind,
- wobei am zweiten Rohrende des Referenzelementes eine erste Aussparung und diametral dazu eine zweite Aussparung vorgesehen ist und das erste Geberelement mit einem ersten Ansatz radial bis in die erste Aussparung hineinragt und mit einem zweiten Ansatz radial aus der zweiten Aussparung vorsteht und dessen vorstehender Abschnitt als Geberabschnitt dient, und
wobei bei Überschreiten eines vorbestimmten maximalen Drehmoments das Referenzelement aus der Drehmomentweiterleitung teilnimmt,
gelöst.

In Abhängigkeit des anliegenden Drehmoments wird das Torsionselement unterschiedlich stark tordiert. Hierdurch wird das erste Geberelement relativ zum zweiten Geberelement verdreht, so dass sich in Abhängigkeit des vorherrschenden Drehmoments unterschiedlich lange Signalpausen zwischen den Signalen ergeben. Mittels der Länge der Signalpausen lässt sich auf den Torsionswinkel und somit auf das anliegende Drehmoment schließen.

Da die Geberelemente derart ausgestaltet sind, dass sie unterschiedlich lange Signale und im relevanten Messbereich unterschiedlich lange Signalpausen zwischen den Signalen erzeugen, lässt sich auf die Drehrichtung des Torsionselements schließen. Das erste Geberelement kann zum Beispiel in Umfangsrichtung länger ausgebildet sein als das zweite Geberelement. Ferner kann in Umfangsrichtung betrachtet der Abstand vom ersten Geberelement zum zweiten Geberelement geringer sein als vom zweiten Geberelement weiter zum ersten Geberelement. Bei einer Drehung in einer ersten Drehrichtung kann somit das lange Signal des ersten Geberelements durch eine lange Signalpause gefolgt sein. In diesem Fall wäre in der anderen Drehrichtung die lange Signalpause von dem langen Signal gefolgt. Mittels dieser Abfolge lässt sich die Drehrichtung bestimmen. Sofern man die Drehrichtung bestimmt hat, lässt sich im weiteren auch die Richtung des Drehmoments ermitteln.

Aufgrund dessen, dass das zweite Geberelement Bestandteil eines Referenzelements ist und dass der erste Rotationskreis und der zweite Rotationskreis aufeinanderliegen, lässt sich das Passieren der Geberelemente oder einer Referenzkante oder Referenzfläche derselben mit nur einem Sensor erfassen.

Das zweite Geberelement kann durch ein Zapfenelement dargestellt sein, dass auf der Außenfläche des Referenzelements zu der zweiten Aussparung aus der der zweite Ansatz austritt, umfangsversetzt angeordnet ist.

Das als zweites Geberelement dienende Zapfenelement ist hierbei in Umfangsrichtung länger ausgebildet als der als erstes Geberelement dienende zweite Ansatz.

Ein bevorzugtes Ausführungsbeispiel der Erfindung ist anhand einer Antriebsanordnung für ein landwirtschaftliches Gerät näher erläutert.

Es zeigt
- Figur 1: einen Längsschnitt für einen Abschnitt einer Antriebsanordnung, der eine Drehmomentmessvorrichtung nach der Erfindung umfasst,
- Figur 2: einen Schnitt II-II gemäß Figur 1 und
- Figur 3: einen Schnitt III-III gemäß Figur 1 sowie die Zuordnung einer Auswerteeinheit.

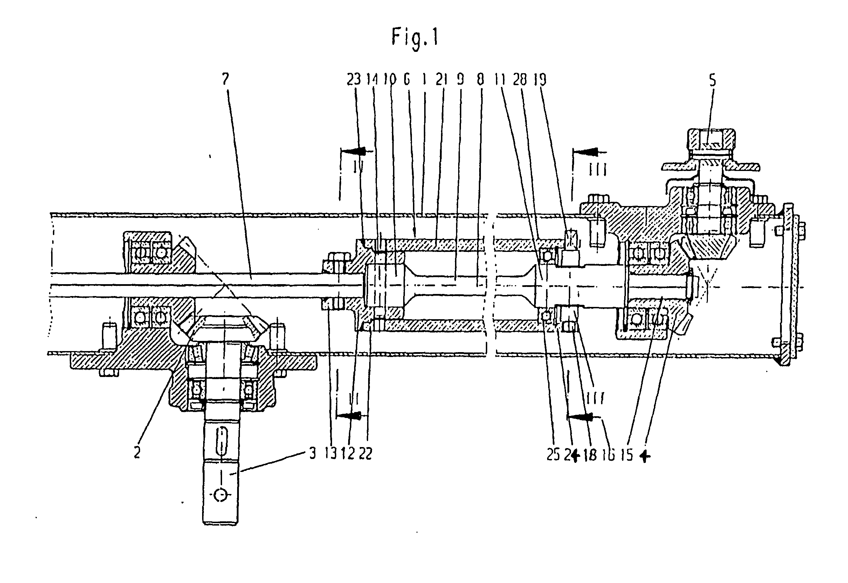

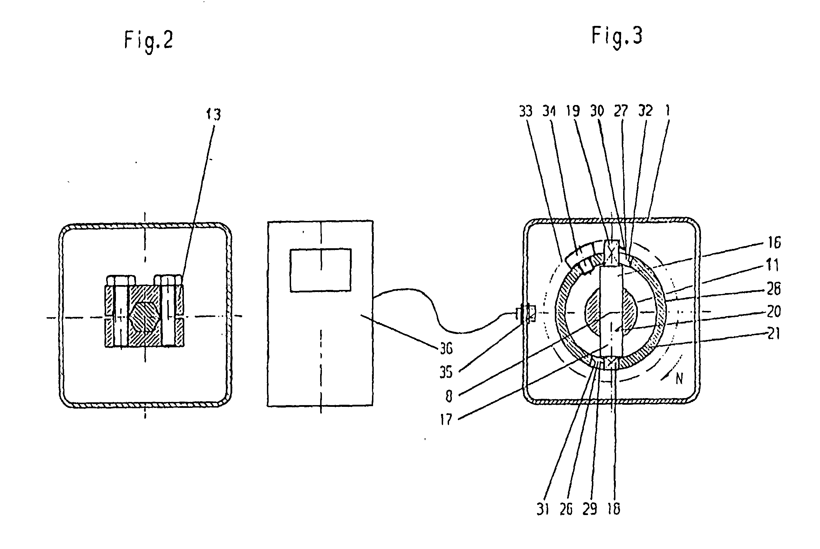

Nachfolgend werden die Figuren 1 bis 3 zusammen beschrieben.

Es ist ein Abschnitt einer Antriebsanordnung für ein landwirtschaftliches Gerät dargestellt, wobei einem Gehäuse 1 oder Tragrahmen, der kastenförmig gestaltet ist, ein erstes Kegelradwinkelgetriebe 2 zugeordnet ist, dessen nach außen ragender Antriebszapfen 3 zur Einleitung eines Drehmomentes dient. Das erste Kegelradwinkelgetriebe 2 ist mit einem zweiten Kegelradwinkelgetriebe 4, das dazu beabstandet dem Gehäuse 1 zugeordnet ist und einen Abtriebszapfen 5 aufweist, über die Drehmomentmessvorrichtung 6 und eine Antriebswelle 7, welche zusammen um die Drehachse 8 drehbar sind, drehmäßig verbunden. Ein über den Antriebszapfen 3 eingeleitetes Drehmoment wird über diese Anordnung an den Abtriebszapfen 5 weitergeleitet. Die Antriebswelle 7 dient auch zum drehmomentmäßigen Anschluss eines oder mehrerer weiterer Kegelradwinkelgetriebe mit entsprechenden Abtriebszapfen. Dabei können in den Antriebsstrang zu den weiteren anzutreibenden Abschnitten eine oder mehrere entsprechend der nachfolgend beschriebenen Drehmomentmessvorrichtung 6 aufgebaute Drehmomentmessvorrichtungen eingeschaltet sein.

Die Drehmomentmessvorrichtung 6 umfasst das Torsionselement 9 in Form einer Welle mit einem Querschnitt, der für den im normalen Arbeitsbereich erforderlichen Drehmomentbereich ausgelegt ist. Das Torsionselement 9 weist ferner ein erstes Wellenende 10 und ein zweites Wellenende 11 auf. Diese sind gegenüber dem dazwischen befindlichen und sich bei Drehmomentbelastung verdrehenden Bereich verdickt ausgebildet. Das erste Wellenende 10 ist über einen Zylinderstift 14 mit dem Anschlusselement 12 verbunden. Dieses weist einen Klemmabschnitt 13 auf, der zur Verbindung mit der Antriebswelle 7 dient. Somit ist das erste Wellenende 10 drehmäßig mit der Antriebswelle 7 verbunden, so dass bei deren Antrieb es mit dieser drehen muss. Das zweite Wellenende 11 ist mit einem Verbindungszapfen 15 versehen, der zur drehfesten Verbindung mit einem Kegelrad des zweiten Kegelradwinkelgetriebes 4 dient. Des weiteren besitzt das zweite Wellenende 11 eine Querbohrung 20, deren Achse die Drehachse 8 rechtwinklig schneidet. In die Querbohrung 20 ist ein erstes Geberelement 16, das Zapfenform aufweist, mit seinem zylindrischen Verbindungsabschnitt 17 fest eingesetzt. Das erste Geberelement 16 weist einen ersten Ansatz 18 und diametral dazu an dem anderen Ende einen zweiten Ansatz 19 auf.

Um das Torsionselement 9 herum ist ein rohrförmiges Referenzelement 21 angeordnet, dessen erstes Rohrende 22 über eine Schweißnaht 23 beabstandet zum ersten Geberelement 16 fest mit dem Anschlusselement 12 verbunden ist. Es ist damit auch fest mit dem ersten Wellenende 10 des Torsionselements 9 verbunden, so dass es dessen Drehbewegung folgt. Das rohrförmige Referenzelement 21 ist im Bereich seines zweiten Rohrendes 24 mittels eines Wälzlagers 25 auf dem zweiten Wellenende 11 gelagert. Das zweite Röhrende 24 folgt damit dem ersten Rohrende 22, d.h. unterliegt keiner Verformung im Messbereich, während ein Referenzpunkt am zweiten Wellenende 11 abhängig von dem am Torsionselement 9 anliegenden Drehmoment einem im drehmomentfreien Zustand am ersten Wellenende 10 entsprechend angeordneten Referenzpunkt je nach Drehrichtung vor- oder nacheilt. An dem zweiten Rohrende 24 sind zwei diametral angeordnete Aussparungen, nämlich die erste Aussparung 26 und die zweite Aussparung 27 angebracht. Diese erstrecken sich in Umfangsrichtung des Rohres über einen begrenzten Bereich, wobei die beiden Aussparungen 26, 27 gleich ausgebildet sind. Der erste Ansatz 18 reicht bis in die erste Aussparung 26 hinein, schließt aber nach außen mit der Außenfläche 28 des rohrförmigen Referenzelementes 21 ab. Der zweite Ansatz 19 durchragt die zweite Aussparung 27 und steht um ein bestimmtes Maß über die Außenfläche 28 des rohrförmigen Referenzelementes 21 vor. Die Umfangserstreckung der beiden Aussparungen 26, 27 ist um ein bestimmtes Maß größer als die der beiden Ansätze 18, 19. Dies bedeutet, dass bei Drehmomentbelastung des Torsionselementes 9 sich die beiden Ansätze 18, 19 im Rahmen ihres Freiheitsgrades in den Aussparungen 26, 27 frei bewegen können, bis die beiden Ansätze 18, 19 mit ihren Abflachungen 29, 30 an den entsprechenden Anschlagflächen 31, 32 zur Anlage kommen und ein vorbestimmtes maximales Drehmoment erreicht wird. Danach nimmt auch das Referenzelement 21 an der Drehmomentweiterleitung vom ersten Kegelradwinkelgetriebe 2 an das zweite Kegelradwinkelgetriebe 4 teil. Da der als Geberabschnitt dienende Abschnitt des zweiten Ansatzes 19 über die Außenfläche 28 des rohrförmigen Referenzelementes 21 vorsteht übernimmt er praktisch die Funktion eines Geberelementes. Dieser ist bei Rotation auf einem Rotationskreis 33 zentriert. Von der Außenfläche 28 des rohrförmigen Referenzelementes 21 steht umfangsversetzt zu der zweiten Aussparung 27 ein zweites Geberelement 34 vor, das in Umfangsrichtung betrachtet länger ausgebildet ist als der zweite Ansatz 19 bzw. als der als Geberabschnitt dienenden Abschnitt des zweiten Ansatzes. Das zweite Geberelement 34 ist auf dem gleichen Rotationskreis wie der zweite Ansatz 19 angeordnet. Ferner schließen das erste Geberelement 16 und das zweite Geberelement 34 eine Winkel ein, der kleiner als 180° ist. Somit ist gewährleistet, dass die beiden Geberelemente bei einer Drehung kurz hintereinander folgende Signale gefolgt von einer langen Signalpause erzeugen. Bei Drehmomentbelastung in Drehrichtung N eilt der zweite Ansatz 19 des Geberelementes 16 dem zweiten Geberelement 34 vor, und das Maß der Voreilung wird durch einen Sensor 35, der dem Rotationskreis 33 und damit den beiden Geberelementen 16, 34 gegenüberstehend angeordnet ist, erfasst. Das Sensorelement 35 ist mit einer Auswerteeinheit 36 verbunden, die dazu dient, aus der Abfolge, d.h. dem zeitlichen Versatz des Vorbeistreichens des in Drehrichtung N voreilenden ersten Geberelementes 16 zu dem nacheilenden zweiten Geberelement 34 das anstehende Drehmoment zu errechnen. Dieses ist proportional dem Abstand der beiden Geberelemente 16, 34 bzw. des zweiten Ansatzes 19 des ersten Geberelementes 16 zum zweiten Geberelement 34.

Die Auswerteeinheit 36 kann ein akustisches Signal erzeugen oder auch Schaltfolgen auslösen, beispielsweise das Stillsetzen des Antriebes. Sie kann aber auch dazu genutzt werden, das jeweils anstehende Drehmoment anzuzeigen oder akustisch zu warnen. Der Einsatz der erfindungsgemäßen Vorrichtung ist nicht auf die oben beschriebene Getriebeanordnung begrenzt. Neben dem Einsatz in Antrieben für landwirtschaftliche Geräte und Maschinen kommt generell eine Verwendung in einem Antriebsstrang, auch beispielsweise dem eines Fahrrades, in Frage.

### Bezugszeichenliste

- 1: Gehäuse
- 2: erstes Kegelradwinkelgetriebe
- 3: Antriebszapfen
- 4: zweites Kegelradwinkelgetriebe
- 5: Abtriebszapfen
- 6: Drehmomentmessvorrichtung
- 7: Antriebswelle
- 8: Drehachse
- 9: Torsionselement
- 10: erstes Wellenende
- 11: zweites Wellenende
- 12: Anschlusselement
- 13: Klemmabschnitt
- 14: Zylinderstift
- 15: Verbindungszapfen
- 16: erstes Geberelement
- 17: Verbindungsabschnitt
- 18: erster Ansatz
- 19: zweiter Ansatz
- 20: Querbohrung
- 21: rohrförmiges Referenzelement
- 22: erstes Rohrende
- 23: Schweißnaht
- 24: zweites Rohrende
- 25: Wälzlager
- 26: erste Aussparung
- 27: zweite Aussparung
- 28: Außenfläche
- 29: Abflachung
- 30: Abflachung
- 31: Anschlagfläche
- 32: Anschlagfläche
- 33: Rotationskreis
- 34: zweites Geberelement
- 35: Sensorelement
- 36: Auswerteeinheit

- N: Drehrichtung

## Patentansprüche

1. Vorrichtung zum Messen von Drehmomenten und der Drehrichtung in einer Antriebsanordnung,
**gekennzeichnet durch**
- ein Torsionselement (9), das vom Drehmoment beaufschlagbar ist und zum Übertragen von Drehmomenten um eine Drehachse (8) drehend antreibbar ist, und das **durch** eine Torsionswelle mit einem ersten Wellenende (10) und einem zweiten Wellenende (11) dargestellt ist,
- ein erstes Geberelement (16), das zapfenförmig gestaltet ist und quer zur Drehachse (8) drehfest am Torsionselement (9) angebracht ist und bei Rotation des Torsionselements (9) auf einem ersten Rotationskreis bewegt wird,
- ein Referenzelement (21), das **durch** ein Rohr mit einem ersten Rohrende (22) und einem zweiten Rohrende (24) dargestellt ist, das koaxial um das Torsionselement (9) angeordnet ist und dessen erstes Rohrende (22) mit dem ersten Wellenende (10) fest verbunden ist,
- ein zweites Geberelement (34), das Bestandteil des Referenzelements (21) ist, das am Außenumfang des zweiten Rohrendes (24) des Referenzelements (21) angeordnet ist, das in einem Referenzabstand zum ersten Geberelement (16) mit dem Torsionselement (9) drehfest verbunden ist und bei Rotation des Torsionselements (9) auf einem zweiten Rotationskreis bewegt wird, wobei der erste Rotationskreis und der zweite Rotationskreis aufeinanderliegen,
- eine Sensoreinheit (35), die ortsfest und in einem Abstand zur Drehachse (8) angeordnet ist und die das Passieren der Geberelemente (16, 34) oder einer Referenzkante oder Referenzfläche erfasst und eine entsprechende Signalfolge erzeugt, wobei die Geberelemente (16, 34) unterschiedlich lange Signale und in dem relevanten Messbereich unterschiedlich lange Signalpausen zwischen den Signalen erzeugen sowie
- eine Auswerteeinheit (36), welcher die Signale zuführbar sind und die aus dem zeitlichen Abstand und der zeitlichen Abfolge der unterschiedlich langen Signale und Signalpausen das anliegende Drehmoment sowie die Drehrichtung ermittelt,
- wobei das zweite Rohrende (24) des Referenzelements (21) eine Aussparung (27) für den Durchtritt des am Torsionselement (9) angebrachten ersten Geberelementes (16) aufweist und beide Geberelemente (16, 34) in einer Ebene auf ihrem gemeinsamen Rotationskreisen (33) umfangsversetzt angeordnet sind,
- wobei am zweiten Rohrende (24) des Referenzelementes (21) eine erste Aussparung (26) und diametral dazu eine zweite Aussparung (27) vorgesehen ist und das erste Geberelement mit einem ersten Ansatz (18) radial bis in die erste Aussparung (26) hineinragt und mit einem zweiten Ansatz (19) radial aus der zweiten Aussparung (27) vorsteht und dessen vorstehender Abschnitt als Geberabschnitt dient, und
- wobei bei Überschreiten eines vorbestimmten maximalen Drehmoments das Referenzelement (21) an der Drehmomentweiterleitung teilnimmt.

2. Vorrichtung nach Anspruch 1,
**dadurch gekennzeichnet,**
**dass** das zweite Geberelement (34) durch ein Zapfenelement dargestellt ist, das auf der Außenfläche (28) des Referenzelementes (21) zu der zweiten Aussparung (27), aus der der zweite Ansatz (19) austritt, umfangsversetzt angeordnet ist.

3. Vorrichtung nach Anspruch 2,
**dadurch gekennzeichnet,**
**dass** das als zweites Geberelement dienende Zapfenelement in Umfangsrichtung länger ausgebildet ist, als der als erstes Geberelement (16) dienende zweite Ansatz (19).

## Claims

1. A device for measuring torque and the rotation direction in a drive assembly,
**characterised by**
- a torsional element (9) which can be torque-loaded and is rotatingly drivable for the purpose of transmitting torque and which is provided in the form of a torsional shaft with a first shaft end (10) and a second shaft end (11),
- a first transmitter element (16) which is pin-shaped and attached to the torsional element (9) in a rotationally fast way so as to extend transversely to the axis of rotation (8) and which, upon rotation of the torsional element (9), is moved on a first rotational circle,
- a reference element (21) which is provided in the form of a tube with a first tube end (22) and a second tube end (24), which tube is arranged coaxially around the torsional element (9) and whose first tube end (22) is firmly connected to the first shaft end (10),
- a second transmitter element (34) which forms part of the reference element (21), which is arranged at the outer circumference of the second tube end (24) of the reference element (21), which, at a reference distance from the first transmitter element (16), is connected to the torsional element (9) in a rotationally fast way and which, upon rotation of the torsional element (9), is moved on a second rotational circle, wherein the first rotational circle and the second rotational circle are superimposed on each other,
- a sensor unit (35) which is arranged so as to be stationary and at a distance from the axis of rotation (8) and which senses the passing of the transmitter elements (16, 34) or of a reference edge or reference face and generates a corresponding sequence of signals, wherein the transmitter elements (16, 34) generate signals of different lengths and, in the relevant measuring range, signal intervals of different lengths between the signals, as well as
- an evaluation unit (36) to which the signal can be transmitted and which determines the applied torque on the basis of the time intervals and the time sequence of the signals and signal intervals of different lengths, as well as the direction of rotation,
- wherein the second tube end (24) of the reference element (21) comprises a recess (27) to allow the passing of the first transmitter element (16) attached to the torsional element (9) and wherein both transmitter elements (16, 34) are arranged so as to be circumferentially offset in one plane on their common rotational circle (33), and
- wherein at the second tube end (24) of the reference element (21) there is provided a first recess (26) and a second recess (27) which is diametrically opposed to the first recess (26) and wherein the first transmitter element, by means of a first projection (18), projects radially as far as and into the first recess (26) and, by means of a second projection (19), projects radially from the second recess (27) and whose projecting portion serves as a threaded portion, and
- wherein, if a predetermined maximum torque is exceeded, the reference element (21) takes part in the transmission of torque.

2. A device according to claim 1,
**characterised in**
**that** the second transmitter element (34) is provided in the form of a pin element which is arranged on the outer face (28) of the reference element (21) so as to be circumferentially offset relative to the second recess (27) from which the second projection (19) projects.

3. A device according to claim 2,
**characterised in**
**that** the pin element serving as the second transmitter element is longer in the circumferential direction than the second projection (19) serving as the first transmitter element (16).

## Revendications

1. Dispositif pour mesurer des couples de rotation et le sens de rotation dans un agencement d'entraînement,
**caractérisé par**
- un élément de torsion (9) auquel on peut appliquer le couple de rotation et qui pour la transmission du couple de rotation peut être entraîné de façon rotative autour d'un axe de rotation (8) et qui est représenté par un arbre de torsion, avec une première extrémité d'arbre (10) et une seconde extrémité d'arbre (11),
- un premier élément transmetteur (16), conçu sous la forme d'un tenon et monté sur l'élément de torsion (9) de façon solidaire en rotation, à la transversale de l'axe de rotation (8) et qui est déplacé sur un premier cercle de rotation, lors de la rotation de l'élément de torsion (9),
- un élément de référence (21) qui est représenté par un tube avec une première extrémité de tube (22) et une seconde extrémité de tube (24), qui est monté de façon coaxiale autour de l'élément de torsion (9) et dont la première extrémité de tube (22) est fixement reliée à la première extrémité d'arbre (10),
- un second élément transmetteur (34) qui est un élément constitutif de l'élément de référence (21), qui est disposé sur la périphérie extérieure de la seconde extrémité de tube (24) de l'élément de référence (21), qui est relié de façon solidaire en rotation avec l'élément de torsion (9) à une distance de référence par rapport à l'élément transmetteur (16) et qui lors de la rotation de l'élément de torsion (9) est déplacé sur un second cercle de rotation, le premier cercle de rotation et le second cercle de rotation étant superposés,
- une unité de capteurs (35) qui est disposée de façon stationnaire et à une distance de l'axe de rotation (8) et qui détecte le passage des éléments transmetteurs (16, 34) ou un bord de référence ou une surface de référence et qui délivre une séquence de signaux correspondante, les éléments transmetteurs (16, 34) délivrant des signaux des différentes longueurs et générant des pauses de différentes longueurs entre les signaux, dans la plage de mesures déterminante, ainsi
- qu'une unité d'évaluation (36) à laquelle les signaux peuvent être amenés et qui à partir de l'intervalle temporel et de l'ordre chronologique temporel des signaux de différentes longueurs et des pauses de différentes longueurs entre les signaux recherche le couple de rotation appliqué, ainsi que le sens de rotation,
- la seconde extrémité de tube (24) de l'élément de référence (21) étant munie d'un évidement (27) pour le passage du premier élément transmetteur (16) disposé sur l'élément de torsion (9) et les deux éléments transmetteurs (16, 34) étant disposés dans un plan sur leurs cercles de rotation communs (33), avec leur périphérie déportée,
- un premier évidement (26) et diamétralement à ce dernier un second évidement (27) étant prévus sur la seconde extrémité de tube (24) de l'élément de référence (21) et le premier élément transmetteur saillant par l'intermédiaire d'un premier embout (18) en direction radiale jusque que dans le premier évidement (26) et par l'intermédiaire d'un second embout (19) dépassant en direction radiale hors du second évidement (27) et son tronçon dépassant faisant office de tronçon transmetteur et
- lors du dépassement d'un couple de rotation maximal prédéfini, l'élément de référence (21) participant à la retransmission du couple de rotation.

2. Dispositif selon la revendication 1,
**caractérisé en ce que**
le second élément transmetteur (34) est représenté par un élément en tenon qui sur la surface extérieure (28) de l'élément de référence (21) est disposé avec sa périphérie déportée par rapport au second évidement (27) hors duquel le second embout (19) dépasse.

3. Dispositif selon la revendication 2,
**caractérisé en ce que**
l'élément en tenon faisant office de second élément transmetteur est conçu avec une longueur supérieure en direction périphérique à celle du second embout (19) faisant office de premier élément transmetteur (16).
